# EUROPÄISCHE PATENTANMELDUNG

(11) **EP 2 781 770 A1**
(43) Veröffentlichungstag der Anmeldung: **24.09.2014**
(21) Anmeldenummer: 14000442.5
(22) Anmeldetag: 06.02.2014
(51) Int. Cl.: F16B 45/02

(54) **Karabinerhaken**

(30) Priorität: 21.03.2013 DE 202013002762 U
(71) Anmelder: Skylotec GmbH, 56566 Neuwied (DE)
(72) Erfinder: Almberger, Günther, 83101 Rohrdorf (DE); Jungmann, Lukas, 9900 Lienz (AT); Schwingshackl, Ulrich, 39057 Eppan a.d. Weinstrasse (IT)
(74) Vertreter: Zeitler - Volpert - Kandlbinder

(57) **Zusammenfassung**

Die vorliegende Erfindung betrifft einen Karabinerhaken mit einem eine Öffnung ausbildenden Grundkörper 1, einem verschwenkbar mit dem Grundkörper verbunden Verschlusselement 2 für die Öffnung und einem Sicherungselement 7, durch das ein Verschwenken des Verschlusselements blockiert werden kann, wobei das Sicherungselement beweglich an dem Grundkörper befestigt ist und von einer das Verschlusselement nicht blockierenden Freigabeposition in eine das Verschlusselement blockierende Blockierposition bewegbar ist.

## Beschreibung

Die Erfindung betrifft einen Karabinerhaken mit einem eine Öffnung ausbildenden, hakenförmigen Grundkörper und einem verschwenkbar mit dem Grundkörper verbunden Verschlusselement für die Öffnung.

Bei Karabinerhaken wird unterschieden zwischen sogenannten Normalkarabinerhaken, bei denen das Verschlusselement ungesichert ist und Verschlusskarabinerhaken, bei denen das Verschlusselement gegen ungewolltes Öffnen, z.B. durch ein Anliegen an einem Felsvorsprung, gesichert ist.

Ein Verschlusskarabinerhaken ist beispielsweise aus der EP 2 397 708 A1 bekannt. Dort umfasst die Verschlusseinrichtung zwei in jeweils einer nutförmigen Vertiefung der Außenseite des Verschlusselements angeordnete, wippend gelagerte Verriegelungshebel, die in ihrer Verriegelungsstellung mit einem (Verriegelungs)Ende in jeweils eine Ausnehmung des Grundkörpers eingreifen und dadurch das Verschlusselement an dem Grundkörper verriegeln. Das Verschlusselement kann dann nicht in den von dem Grundkörper ausgebildeten Innenbereich verschwenkt werden. Ein Öffnen des Karabiners ist somit nicht möglich. Dabei sind die Verriegelungshebel mittels einer Feder in ihre Verriegelungsstellung belastet. Zum Entriegeln des Verschlusselements bzw. zum Öffnen des Karabiners ist es erforderlich, die beiden wippend gelagerten Verriegelungshebel an dem dem Verriegelungsende gegenüberliegenden Ende drückend zu betätigen, wodurch die Verriegelungsenden aus den Ausnehmungen des Grundkörpers herausgeschwenkt werden.

Nachteilig an dem aus der EP 2 397 708 A1 bekannten Karabiner ist der vergleichsweise große Herstellungsaufwand für das die Verriegelungshebel aufweisende Verschlusselement.

Ausgehend von diesem Stand der Technik lag der Erfindung die Aufgabe zugrunde, einen verbesserten Verschlusskarabinerhaken anzugeben, der sich trotz geringer Herstellungskosten durch eine gute Bedienbarkeit auszeichnet.

Diese Aufgabe wird durch einen Karabinerhaken gemäß dem unabhängigen Anspruch 1 gelöst. Vorteilhafte Ausgestaltungen des erfindungsgemäßen Karabinerhakens sind Gegenstand der abhängigen Ansprüche und ergeben sich aus der nachfolgenden Beschreibung der Erfindung.

Ein gattungsgemäßer Karabinerhaken mit einem eine Öffnung ausbildenden Grundkörper, einem verschwenkbar mit dem Grundkörper verbunden Verschlusselement für die Öffnung und einem Sicherungselement, durch das ein Verschwenken des Verschlusselements blockiert werden kann, ist erfindungsgemäß dadurch weitergebildet, dass das Sicherungselement beweglich an dem Grundkörper befestigt ist, wobei dieses von einer das Verschlusselement nicht blockierenden Freigabeposition in eine das Verschlusselement blockierende Blockierposition bewegbar ist.

Durch die Anordnung des Sicherungselements an dem Grundkörper wird die Verwendung eines konstruktiv einfachen Verschlusselements ermöglicht, wodurch geringe Herstellungskosten für den Karabinerhaken realisiert werden können. Insbesondere kann vorteilhafterweise das Verschlusselement als sogenannter Drahtschnapper ausgebildet sein. Ein solcher Drahtschnapper kann aus lediglich einem gebogenen Drahtstück bestehen, dessen freie Enden in Öffnungen des Grundkörpers geführt sind und dadurch die Drehlagerung ausbilden. Insbesondere kann dann auch vorgesehen sein, dass die beiden die Drehlagerung ausbildenden freien Enden nicht koaxial angeordnet sind, wodurch beim Verschwenken eine elastische Deformation des Drahtschnappers realisiert werden kann, wobei die elastischen Rückstellkräfte zu einem selbsttätigen Schließen bzw. geschlossen Halten führen können.

In einer bevorzugten Ausgestaltung des erfindungsgemäßen Karabinerhakens kann vorgesehen sein, dass das Sicherungselement drehbar an dem Grundkörper befestigt ist, um dieses von der das Verschlusselement nicht blockierenden Freigabeposition in die das Verschlusselement blockierende Blockierposition bewegbar auszugestalten. Eine solche Ausgestaltung des Karabinerhakens kann sich sowohl durch eine einfache und kostengünstige Herstellbarkeit als auch durch eine gute Bedienbarkeit auszeichnen.

Vorzugsweise kann der Grundkörper des erfindungsgemäßen Karabinerhakens einen Hinterschnitt ausbilden, in den ein freies Ende des Verschlusselements in einer Verschlussstellung eingreift, wobei das Sicherungselement in der Blockierposition die Öffnung des Hinterschnitts zumindest teilweise verschließt. Dadurch kann auf konstruktiv einfache Weise die Blockierbarkeit des Verschlusselements erreicht werden.

Weiterhin bevorzugt kann das Sicherungselement einen Hinterschnitt ausbilden, in den in der Blockierposition das Verschlusselement bei einem beginnenden Verschwenken eingreift. Dadurch kann bei einer Belastung des Verschlusselements in die Öffnungsrichtung ein Eingreifen des Verschlusselements in das Sicherungselement erreicht werden, das ein ungewolltes Öffnen des Verschlusselements auch dann wirksam verhindert, wenn die Belastung auf das Verschlusselement so hoch ist, dass dieses deformiert wird beziehungsweise ohne das Eingreifen in das Sicherungselement deformiert würde. Eine solche Sicherung des Verschlusselements kann insbesondere dann vorteilhaft sein, wenn dieses in Form eines Drahtschnappers ausgebildet ist. Zudem kann durch das Eingreifen des Verschlusselements in das Sicherungselement die Stabilität des Karabinerhakens erhöht werden.

Um ein ungewolltes Bewegen des Sicherungselements zu vermeiden, kann in einer weiterhin bevorzugten Ausgestaltung des erfindungsgemäßen Karabinerhakens eine Fixiervorrichtung vorgesehen sein, durch die das Sicherungselement in der Freigabeposition und/oder der Blockierposition fixierbar ist. Dabei kann die Fixiervorrichtung vorzugsweise in Form einer Rastverbindung ausgebildet sein.

Als Rastverbindung wird erfindungsgemäß das elastische Einrasten eines ersten Verbindungselements (z.B. ein Vorsprung) in ein zweites Verbindungselement (z.B. eine Vertiefung) verstanden.

Insbesondere kann die Rastverbindung in Form eines in eine Vertiefung des Sicherungselements eingreifenden Vorsprungs des Grundkörpers oder eines in eine Vertiefung des Grundkörpers eingreifenden Vorsprungs des Sicherungselements ausgebildet sein.

In einer besonders bevorzugten Ausgestaltung des erfindungsgemäßen Karabinerhakens kann das Sicherungselement zwei Seitenteile umfassen, die mittels eines Verbindungsteils verbunden sind. Dadurch kann ein stabiles Sicherungselement geschaffen werden, dass zudem vorteilhaft in den Grundkörper integrierbar sein kann. Ein solches Sicherungselement kann insbesondere auch in Form eines einfachen Blechbiegeteils ausgebildet sein, was wiederum eine einfache und somit kostengünstige Herstellbarkeit ermöglicht. Insbesondere bei einem solchen Sicherungselement kann eine Rastverbindung dafür vorteilhafterweise dadurch realisiert werden, dass zumindest eines, vorzugsweise beide Seitenteile eine oder mehrere Vertiefungen aufweisen, in die in der Freigabeposition und/oder der Blockierposition des Sicherungselements Vorsprünge, die von dem Grundkörper ausgebildet sind, eingreifen. Beispielsweise dann, wenn der Grundkörper als Gussbauteil (insbesondere Aluminiumdruckguss) ausgebildet ist, ist die Ausbildung der Vorsprünge mit keinem relevanten Aufwand verbunden.

Eine vorteilhafte Integration eines solchen Sicherungselements in den Grundkörper des erfindungsgemäßen Karabinerhakens kann vorsehen, dass die Seitenteile drehbar auf einer gemeinsamen Achse gelagert sind.

Vorteilhafterweise kann vorgesehen sein, dass das Sicherungselement, insbesondere aber zumindest die Seitenteile in einer Vertiefung des Grundkörpers angeordnet sind und weiterhin bevorzugt mit der angrenzenden Oberfläche des Grundkörpers bündig abschließen. Dadurch kann die Wahrscheinlichkeit einer ungewollten Betätigung des Sicherungselements reduziert werden.

In einer weiterhin bevorzugten Ausgestaltung des erfindungsgemäßen Karabinerhakens kann vorgesehen sein, dass das Verschlusselement bei einem Verschwenken von einer die Öffnung freigebenden Stellung in eine die Öffnung verschließende Stellung das sich in der Blockierposition befindliche Sicherungselement in die Freigabeposition bewegt. Das Sicherungselement verhindert dadurch ein selbsttätiges Schließen des Verschlusselements auch dann nicht, wenn sich das Sicherungselement bei geöffnetem Verschlusselement ungewollter Weise in der Blockierposition befindet.

Bei dem erfindungsgemäßen Karabinerhaken kann es sich insbesondere um einen solchen handeln, der dem Typen B gemäß den Normen EN 12275 und/oder UIAA 121 entspricht.

Die Erfindung wird nachfolgend anhand eines in den Zeichnungen dargestellten Ausführungsbeispiels näher erläutert. In den Zeichnungen zeigt:
- Fig.1:: einen erfindungsgemäßen Karabinerhaken mit Sicherungselement in der Freigabeposition in einer Seitenansicht;
- Fig. 2:: einen vergrößerten Ausschnitt des Karabinerhakens gemäß der Fig. 1 in einer perspektivischen Ansicht;
- Fig. 3:: der Karabinerhaken mit Sicherungselement in der Blockierposition in einer Seitenansicht; und
- Fig.4:: einen vergrößerten Ausschnitt des Karabinerhakens gemäß der Fig. 3 in einer perspektivischen Ansicht.

Der in den Zeichnungen dargestellte Karabiner umfasst einen Grundkörper 1 in Form eines gebogenen Profilelements, dessen zwei freie Enden, sich in einem Abstand gegenüberliegend, eine (Karabiner-)Öffnung ausbilden. Diese Öffnung ist mittels eines Verschlusselements verschließbar. Das Verschlusselement ist als Drahtschnapper 2 ausgebildet und besteht aus einem mehrfach gebogenen Drahtstück ausreichender Festigkeit. Das Drahtstück ist ca. mittig zweimal in einem kurzen Abstand um ca. 90° umgebogen ausgebildet. Dadurch wird ein Verriegelungsabschnitt 3 des Drahtschnappers 2 ausgebildet, der für einen Eingriff in einen Hinterschnitt 4 an einem Ende des Grundkörpers 1 vorgesehen ist. Von dem Verriegelungsabschnitt erstrecken sich zwei annähernd parallel verlaufende Seitenabschnitte 5 in Richtung des anderen Endes des Grundkörpers. Dort sind die Seitenabschnitte 5 erneut um ca. 90° abgewinkelt. Diese abgewinkelten, freien Endabschnitte 6 des Drahtstücks erstrecken sich in jeweils eine Durchgangsöffnung des Grundkörpers 1, wobei die Durchgangsöffnungen nicht koaxial sondern parallel zueinander versetzt verlaufen. Dies dient als Drehlagerung für den Drahtschnapper 2, wobei durch den Versatz der beiden Durchgangsöffnungen ein Verschwenken des Drahtschnappers 2 in den von dem Grundkörper 1 ausgebildeten Innenbereich zu einer elastischen Deformation des Drahtschnappers 2 führt, die infolge der elastischen Rückstellkräfte ein selbsttätiges Schließen des Drahtschnappers 2 bewirken, wenn dieser nicht mehr manuell belastet wird.

Der Karabinerhaken umfasst weiterhin ein Sicherungselement 7, das ein unbeabsichtigtes Öffnen des Drahtschnappers 2 vermeidet. Das Sicherungselement 7 ist in Form eines wippenartigen Schwenkhebels ausgebildet. Dieses umfasst zwei Seitenteile 8, die in paralleler Ausrichtung in zwei Vertiefungen 9 des Grundkörpers 1 angeordnet und in dem Grundkörper 1 drehbar gelagert sind. Hierzu ist ein (vernieteter) Lagerbolzen 10 vorgesehen, der sich durch Durchgangsöffnungen der beiden Seitenteile 8 sowie des Grundkörpers 1 erstreckt. Die zwei Seitenteile 8 sind mittels eines Verbindungsteils 11 verbunden.

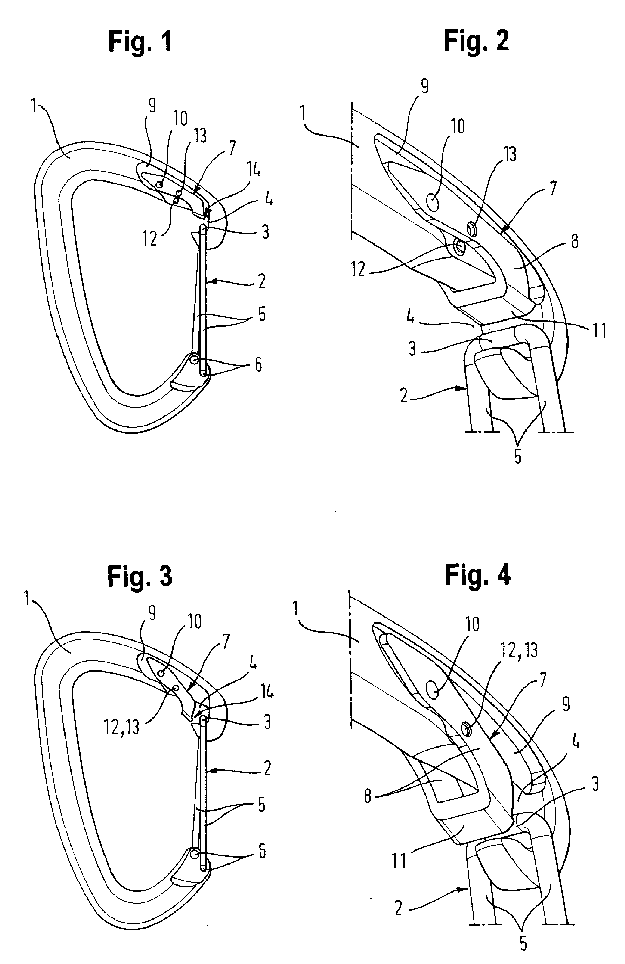

Das Sicherungselement 7 kann manuell von einer Freigabeposition (vgl. Fig. 1 und 2) in eine Blockierposition (vgl. Fig. 3 und 4) verschwenkt werden. Dies ist beidseitig des Karabinerhakens mit einem Finger möglich. In der Freigabeposition ist der Verbindungsteil 11 so weit in Richtung des Grundkörpers 1 bewegt (insbesondere liegt dieser an dem Grundkörper 1 an), dass der Hinterschnitt 4 weitgehend freigegen ist. Demnach kann der Verriegelungsabschnitt 3 des Drahtschnappers 2 aus dem Hinterschnitt 4 herausbewegt werden. Ein manuelles Öffnen des Drahtschnappers 2 ist somit möglich.

Befindet sich das Sicherungselement 7 dagegen in der Blockierposition, so sind der Verbindungsteil 11 sowie die sich daran anschließenden Abschnitte der Seitenteile 8 direkt vor der Öffnung des Hinterschnitts 4 angeordnet und blockieren somit ein Herausbewegen des Verriegelungsabschnitts 3 des Drahtschnappers 2 aus dem Hinterschnitt 4 und dadurch ein Öffnen des Karabinerhakens.

Das Sicherungselement 7 wird sowohl in der Freigabeposition als auch der Blockierposition mittels Rastverbindungen fixiert. Hierzu weist der Grundkörper 1 in jeder der Vertiefungen 9 einen Vorsprung 12 auf, die in der Blockierposition in Durchgangsöffnungen 13 der Seitenteile 8 eingreifen und in der Freigabeposition seitlich neben den Seitenteilen 8 angeordnet sind. Bei der Bewegung des Sicherungselements 7 von der Freigabeposition in die Blockierposition - oder andersherum - gleiten die Spitzen der Vorsprünge 12 ein Stück weit an den Innenseiten der Seitenteile 8. Hierzu ist, da der Abstand zwischen den beiden Spitzen der Vorsprünge 12 etwas größer als der Abstand zwischen den Innenseiten der Seitenteile 8 ist, erforderlich, dass das Sicherungselement 7 ein aufgebogen wird. Die durch die Aufbiegung erzeugte elastische Rückstellkraft sorgt für das Einrasten der Vorsprünge 12 in die Durchgangsöffnungen 13 bzw. neben die Seitenteile 8.

Der Verbindungsteil 11 bildet mit den benachbarten Abschnitten der Seitenteile 8 einen Absatz bzw. Hinterschnitt 14 des Sicherungselements 7 aus. Wird der Drahtschnapper 2 bei dem in Blockierposition angeordneten Sicherungselements 7 in die Öffnungsrichtung belastet, greift der Verriegelungsabschnitt 3 des Drahtschnappers 2 in diesen Hinterschnitt 14 des Sicherungselements 7 ein. Dies führt zu einer formschlüssigen Sicherung des Drahtschnappers 2, die ein unbeabsichtigtes Öffnen desselben auch dann verhindert, wenn dieser mit sehr großen Kräften belastet wird. Ein Vorbeirutschen des Drahtschnappers 2 an dem Sicherungselement 7 infolge einer durch die Belastung hervorgerufenen Deformation des Drahtschnappers 2 kann dadurch verhindert werden. Zudem wird durch die dadurch bewirkte mechanische Verbindung der freien Enden des Grundkörpers 1 die Stabilität des Karabinerhakens erhöht.

Sofern sich das Sicherungselement 7 bei geöffnetem Karabinerhaken, d.h. bei einem sich im Innenbereich befindlichen Drahtschnapper 2, in der Blockierposition befindet, so wird dieses beim Schließen des Karabinerhakens selbsttätig von dem Drahtschnapper 2 in die Freigabeposition bewegt. Dies erfolgt durch einen Kontakt des Verriegelungsabschnitts 3 des Drahtschnappers 2 mit dem schräg bezüglich der Bewegungsrichtung des Verriegelungsabschnitts 3 beim Schließen ausgerichteten Verbindungsteil 11 des Sicherungselements 7.

## Patentansprüche

1. Karabinerhaken mit einem eine Öffnung ausbildenden Grundkörper (1), einem verschwenkbar mit dem Grundkörper (1) verbunden Verschlusselement für die Öffnung und einem Sicherungselement (7), durch das ein Verschwenken des Verschlusselements blockiert werden kann, **dadurch gekennzeichnet, dass** das Sicherungselement (7) beweglich an dem Grundkörper (1) befestigt ist und von einer das Verschlusselement nicht blockierenden Freigabeposition in eine das Verschlusselement blockierende Blockierposition bewegbar ist.

2. Karabinerhaken gemäß Anspruch 1, **dadurch gekennzeichnet, dass** das Sicherungselement (7) drehbar an dem Grundkörper (1) befestigt ist.

3. Karabinerhaken gemäß Anspruch 1 oder 2, **dadurch gekennzeichnet, dass** der Grundkörper (1) einen Hinterschnitt (4) ausbildet, in den ein freies Ende des Verschlusselements in einer Verschlussstellung eingreift, wobei das Sicherungselement (7) in der Blockierposition die Öffnung des Hinterschnitts (4) zumindest teilweise verschließt.

4. Karabinerhaken gemäß Anspruch 3, **dadurch gekennzeichnet, dass** das Sicherungselement (7) einen Hinterschnitt (15) ausbildet, in den in der Blockierposition das Verschlusselement (7) bei einem beginnenden Verschwenken eingreift.

5. Karabinerhaken gemäß einem der vorhergehenden Ansprüche, **gekennzeichnet durch** eine Fixiervorrichtung, **durch** die das Sicherungselement (7) in der Freigabeposition und/oder der Blockierposition fixierbar ist.

6. Karabinerhaken gemäß Anspruch 5, **dadurch gekennzeichnet, dass** die Fixiervorrichtung als Rastverbindung ausgebildet ist.

7. Karabinerhaken gemäß Anspruch 6, **dadurch gekennzeichnet, dass** die Rastverbindung in Form eines in eine Vertiefung des Sicherungselements (7) eingreifenden Vorsprungs (12) des Grundkörpers oder eines in eine Vertiefung des Grundkörpers eingreifenden Vorsprungs des Sicherungselements ausgebildet ist.

8. Karabinerhaken gemäß einem der vorhergehenden Ansprüche, **dadurch gekennzeichnet, dass** das Sicherungselement (7) zwei Seitenteile (8) umfasst, die mittels eines Verbindungsteils (11) verbunden sind.

9. Karabinerhaken gemäß Anspruch 8, **dadurch gekennzeichnet, dass** die Seitenteile (8) drehbar auf einer gemeinsamen Achse gelagert sind.

10. Karabinerhaken gemäß Anspruch 8 oder 9, **dadurch gekennzeichnet, dass** die Seitenteile (8) in Vertiefungen (9) des Grundkörpers (1) angeordnet sind.

11. Karabinerhaken gemäß einem der vorhergehenden Ansprüche, **dadurch gekennzeichnet, dass** das Verschlusselement (7) bei einem Verschwenken von einer die Öffnung freigebenden Stellung in eine die Öffnung verschließende Stellung das sich in der Blockierposition befindliche Sicherungselement (7) in die Freigabeposition bewegt.
